# EUROPÄISCHE PATENTSCHRIFT

(11) **EP 2 079 176 B1**
(45) Veröffentlichungstag und Bekanntmachung des Hinweises auf die Patenterteilung: **16.06.2010**
(21) Anmeldenummer: 08000463.3
(22) Anmeldetag: 11.01.2008
(51) Int. Cl.: H04J 3/06

(54) **Kommunikationseinrichtung und Verfahren zur Übertragung von Daten**
Communication device and method of data transfer
Dispositif de communication et procédé de transmission de données

(43) Veröffentlichungstag der Anmeldung: 15.07.2009
(73) Patentinhaber: Micronas GmbH, 79108 Freiburg i. Br. (DE)
(72) Erfinder: Bidenbach, Reiner, 79279 Vörstetten (DE); Bayer, Martin, Dipl.-Ing., 79279 Vörstetten (DE); Fink, Hans-Jörg, Dipl.-Ing., 79108 Freiburg (DE)
(74) Vertreter: Huwer, Andreas

(56) Entgegenhaltungen:
- KOOPMAN P J ET AL: "TIME DIVISION MULTIPLE ACCESS WITHOUT A BUS MASTER" INTERNET CITATION, [Online] XP002238363 Gefunden im Internet: URL:http://www.ece.cmu.edu/ koopman/jtdma/jtdma.html> [gefunden am 2003-04-14]

## Beschreibung

Die Erfindung betrifft ein Verfahren zur Übertragung von Daten zwischen mindestens zwei Sendern und wenigstens einem Empfänger, wobei die Sender und der wenigstens eine Empfänger an einem Bus angeschlossen sind. Außerdem bezieht sich die Erfindung auf eine Kommunikationseinrichtung mit mindestens zwei an einem Bus angeschlossenen Sendern und wenigstens einem an dem Bus angeschlossenen Empfänger, wobei die Sender jeweils mindestens eine Datenquelle und eine damit verbundene erste Busschnittstelle aufweisen, und wobei der wenigstens eine Empfänger eine Datensenke und eine damit verbundene zweite Busschnittstelle hat.

Ein derartiges Verfahren und eine derartige Kommunlkationselnrichtung sind aus der Praxis bekannt. Die Kommunikationseinrichtung ist in einem Kraftfahrzeug angeordnet und hat mehrere Sender, die jeweils als Datenquelle einen Sensor zur Erfassung einer physikalischen Messgröße aufweisen. Mit Hilfe der Sensoren werden Messwerte erfasst und In einem in den Sender integrierten Datenspeicher abgelegt. Aus dem Datenspeicher können die Messwerte ausgelesen und über einen Bus an einen als Steuergerät ausgestalteten Empfänger übermittelt werden. Zur Übertragung der Messwerte sendet das Steuergerät zunächst über den Bus eine entsprechende Anfrage an einen der Sensoren, woraufhin der betreffende Sensor die Daten auf den Bus sendet. Von dort werden die Daten dann In das Steuergerät eingelesen. Die Sender können auch ohne eine vorherige Anfrage des Steuergeräts auf den Bus senden. Die Kommunikationseinrichtung weist dazu eine Arbitrierungsloglk auf, welche die Datenübertragung über den Bus steuert. Durch die Arbitrierungsloglk soll vermieden werden, dass mehrere Busteilnehmer gleichzeitig auf den Bus senden und dass es dabei zu Übertragungsfehlern kommt. Die Kommunikationseinrichtung hat jedoch den Nachteil, dass insbesondere die Arbitrierungslogik ziemlich aufwändig ist. Ungünstig ist außerdem, dass die einzelnen Busteilnehmer (Sender, Empfänger) als Taktgeber langzeltstabile Oszillatoren benötigen. Diese sind jedoch relativ teuer. Das Dokument "Time Division Multiple Access without a Bus Master", Koopman P.J., entspricht der Präambel der Ansprüche 1 und 5.

Aus der Praxis ist auch eine Kommunikationseinrichtung bekannt, die mehrere Sender aufweist, die jeweils über eine eigene Datenleitung an einem zentralen Steuergerät angeschlossen sind. Dabei senden die einzelnen Sender über die ihnen jeweils zugeordnete Datenleitung kontinuierlich Daten an das Steuergerät. Der Verkabelungsaufwand steigt Jedoch mit zunehmender Anzahl der Sensoren relativ stark an. Außerdem muss das Steuergerät eine entsprechend große Anzahl von Ein- und/oder Ausgöngen aufweisen.

Es besteht deshalb die Aufgabe, ein Verfahren und eine Kommunikationseinrichtung der eingangs genannten Art zu schaffen, die auf einfache Weise eine Datenübertragung zwischen den Sendern und dem wenigstens einen Empfänger ermöglichen.

Diese Aufgabe wird bezüglich des Verfahrens durch folgende Verfahrensschritte gelöst.
a) Anlegen eines Synchronisationssignals an den Bus und Setzen zumindest einer Anzahl von Datenmengenzählern, die der um eins reduzierten Anzahl von Sendern entspricht, auf einen vorbestimmten Startwert,
b) für einen ersten Sender Durchlaufen folgender Schritte:
   b1) Übertragen eines Datenelements vom Sender über den Bus zu dem wenigstens einen Empfänger,
   b2) Ermitteln der gesendeten Datenmenge,
   b3) Vergleich der gesendeten Datenmenge mit einer dem Sender zugeordneten, vorbestimmten Datenmenge,
   b4) wenn die ermittelte Datenmenge kleiner ist als die vorbestimmte Datenmenge: Wiederholen der Schritte b1) bis b4),
c) für jeden weiteren Sender Durchlaufen folgender Schritte:
   c1) Empfangen eines Datenelements vom Bus,
   c2) Anpassen des Zählerstands eines dem betreffenden Sender zugeordneten Datenmengenzählers an die empfangene Datenmenge,
   c3) Vergleich des Zählerstands mit einem dem betreffenden Sender zugeordneten, vorbestimmten Datenmengenwert,
   c4) falls der Zählerstand den vorbestimmten Datenmengenwert noch nicht erreicht hat Wlederholen der Schritte c1) - c4),
   c5) Durchführen der Schritte b1) bis b4) für den betreffenden Sender,
wobei der Datenmengenwert des weiteren Senders derart gewählt wird oder die Datenmengenwerte der weiteren Sender derart gewählt werden, dass jeweils nur ein Sender gleichzeitig auf den Bus sendet.

In vorteilhafter Weise erfolgt also Die Datenübertragung über den gemeinsamen Bus bzw. die gemeinsame Busleitung in einer durch die Konfiguration der Sender vorgegebenen Reihenfolge. Dabei senden die einzelnen Sender jeweils nacheinander solange Datenelemente auf den Bus, bis eine für den jeweillgen Sender vorgesehene Datenmenge von der Datenquelle des Senders zum Bus übertragen wurde. Zunächst sendet ein erster Sender seine Daten auf den Bus. Der Sender, der als nächstes mit der Datenübertragung an der Reihe ist, beginnt mit der Datenübertragung jeweils erst dann, wenn der Sender, der gerade auf den Bus sendet, den Sendevorgang beendet hat. Den Zeitpunkt, an dem die einzelnen Sender mit der Datenübertragung beginnen, ermitteln die Sender, die nach dem ersten Sender ihre Daten auf den Bus übertragen, jeweils dadurch, dass sie den Bus abhören und - ausgehend von einem Synchronisationssignal - die über den Bus übermittelte Datenmenge messen und mit einem dem betreffenden Sender zugeordneten, vorbestimmten Datenmengenwert vergleichen. Sobald dieser Datenmengenwert erreicht ist, beginnt der betreffende Sender mit der Datenübertragung. Somit wird eine Kollision, die dadurch entsteht, dass mehrere Sender gleichzeitig auf den Bus senden, von vorne herein vermieden. Die Datenübertragung über den Bus erfolgt vorzugsweise periodisch, Indem nach Beendigung eines ersten Datenübertragungszyklus In entsprechender Weise weitere Datenübertragungszyklen durchgeführt werden. Das erfindungsgemäße Datenübertragungsverfahren kann vorteilhaft in einem redundanten System, wie z.B. einem mehrere Sensorelemente aufweisenden Positionssensor für ein Stellelement zur Anwendung kommen. Dabei kann das Stellelement insbesondere eine Drosselklappe oder ein Gaspedal einer Verbrennungskraftmaschine sein.

Bei einer bevorzugten Ausgestaltung der Erfindung ist bei mindestens zwei Datenelementen die Zeitdauer für die Übertragung vom Sender über den Bus zu dem wenigstens einen Empfänger unterschiedlich. Dies kann insbesondere dadurch erreicht werden, dass ein Datenelement mit einem Informationsgehalt von mehreren Bit durch ein Bussignal repräsentiert wird, das mindestens einen ersten Signalpegel und wenigstens einen zweiten Signalpegel aufweist, wobei die Dauer mindestens eines dieser Signalpegel von der in dem Datenelement gespeicherten Information abhängig ist.

Bei einer vorteilhaften Ausführungsform der Erfindung überprüft mindestens ein Sender die Plausibilität der der über den Bus übertragenen Datenelemente und gibt ein vom Ergebnis dieser Überprüfung abhängiges Statussignal auf den Bus aus. Das Statussignal kann dann von den übrigen Busteilnehmern (Sender, Empfänger) eingelesen werden, um beim Auftreten eines Fehlers gegebenenfalls die vom Bus in den Empfänger eingelesenen Daten zu verwerfen und die Daten, bei deren Übermittlung der Fehler aufgetreten ist, noch einmal über den Bus von den Sendern zum Empfänger zu übertragen. Das Statussignal wird bevorzugt nach Beendigung eines Daten-Übertragungszyklus auf den Bus gesendet. Dabei wird unter einem Daten-Übertragungszyklus der Zeitraum zwischen dem Anlegen des Synchronlsationssignals an den Bus und dem Zeitpunkt verstanden, an dem alle am Bus angeschlossenen Sender die ihnen zugewiesene Datenmenge auf den Bus gesendet haben.

Vorzugsweise wird für mindestens einen Sender die Zeitdauer bestimmt, während welcher der betreffende Sender mit der Übertragung seiner Datenelemente auf den Bus an der Reihe ist, wobei die gemessene Zeitdauer mit einem Grenzwert verglichen wird, und wobei für den Fall, dass die gemessene Zeitdauer mit dem Grenzwert übereinstimmt und/oder größer ist als dieser, ein weiterer Sender die in Anspruch 1 genannten Schritte b1) bis b4) durchführt, Dadurch Ist eine Datenübertragung auch dann noch über den Bus möglich, wenn einmal ein Sender ausfallen und/oder gestört sein sollte.

Die vorstehend genannte Aufgabe wird bezüglich der Kommunikationseinrichtung der eingangs genannten Art dadurch gelöst, dass eine Einrichtung zum Senden eines Synchronisationssignals auf den Bus vorgesehen ist, dass die ersten Busschnittstellen jeweils eine mit dem Bus verbundene Sendeeinrichtung, eine mit dem Bus und einer Steuereinrichtung verbundene Empfangseinrichtung, eine mit dieser verbundene, einen Datenmengenzähler aufweisende Messeinrichtung zur Messung der Menge der über den Bus übertragenen Daten, und eine mit der Messeinrichtung und der Steuereinrichtung verbundene Vergleichseinrichtung zum Vergielchen des Zählerstands des Datenmengenzählers mit mindestens einem vorbestimmten Datenmengenwert aufweisen, dass die Steuereinrichtung eines ersten Senders derart mit dessen Empfangseinrlchtung und dessen Sendeeinrichtung in Steuerverbindung steht, dass nach dem Empfangen des Synchronlsationsslgnals Daten einer vorbestimmten ersten Datenmenge von der Datenquelle des ersten Senders mittels der Sendeeinrichtung auf den Bus gesendet wird, dass die Steuereinrichtung mindestens eines zweiten Senders derart mit dessen Sendeeinrichtung in Steuerverbindung steht, dass nach dem Empfangen einer dem betreffenden zweiten Sender zugeordneten, vorbestimmten zweiten Datenmenge Daten einer vorbestimmten dritten Datenmenge von der Datenquelle des betreffenden zweiten Senders mittels dessen Sendeelnrichtung auf den Bus gesendet werden, und dass die erste Datenmenge, die mindestens eine zweite Datenmenge und die mindestens eine dritte Datenmenge derart gewählt sind, dass jeweils nur ein Sender gleichzeitig auf den Bus sendet.

Der Zugriff auf den gemeinsamen Bus erfolgt periodisch in einer durch die Konfiguration der Sender vorgegebenen Reihenfolge, wobei die einzelnen Sender nacheinander Daten über den Bus zu dem wenigstens einen Empfänger senden. Die Kommunikationseinrichtung vermeidet auf einfache Weise eine Kollision auf dem Bus. Der Empfänger erhält die Daten scheinbar von nur einem Element. Die zugrunde liegende Busstruktur Ist für den Empfänger nicht sichtbar. Dies führt für den Empfänger zu einer sehr einfachen Auswertemöglichkeit der Daten.

Vorteilhaft ist, wenn die Kommunikationseinrichtung eine Einrichtung zum Senden eines Taktdauersignals auf den Bus aufweist, wenn die Sender Jeweils einen mit der Sendeeinrichtung verbundenen Taktgeber zum Erzeugen eines Taktsignals haben, wenn mindestens ein Taktgeber eine Stelleinrichtung zur Einstellung der Periodendauer seines Taktsignals aufweist, und wenn die Stelleinrichtung derart mit der Empfangseinrichtung des betreffenden Senders in Steuerverbindung steht, dass die Perlodendauer des Taktsignals in Abhängigkeit von der Dauer des Taktdauersignals einstellbar ist. Die Taktgeber der einzelnen Sender können dann auf einfache Weise ihre Periodendauer an das Taktdauersignal anpassen, so dass dann die Taktgeber aller an dem Bus angeschlossenen Sender synchron zueinander arbeiten. Da das Taktdauersignal periodisch auf den Bus gesendet werden kann, brauchen die Taktgeber nicht langzeltstabil zu sein. Die Taktgeber können dadurch einfach und kostengünstig aufgebaut sein. Die Einrichtung zum Senden des Taktdauerslgnals Ist bevorzugt in einen der Sender integriert. Dieser Sender kann als Master-Sender dienen und ggf. auch das Synchronisationssignal auf den Bus senden.

Bei einer bevorzugten Ausgestaltung der Erfindung weist die Datenquelle mindestens einen Sensor zur Erfassung eines Messsignals auf. Der Sensor kann beispielsweise ein Magnetfeldsensor, insbesondere ein Hallsensor sein.

Zweckmäßigerweise umfasst die Sendeeinrichtung eine Pulsweitenmodulationseinrichtung, mit der ein Datensignal erzeugbar Ist, das zumindest einen einen ersten Signalpegel aufweisenden ersten Datenslgnalabschnitt und einen einen zweiten Signalpegel aufweisenden zweiten Datensignalabschnitt aufweist, und dass die Länge mindestens eines dieser Datensignalabschnitte von einer In dem Datensignal gespeicherten Information abhängig ist. Die In Abhängigkeit von den über den Bus zu übertragenden Datenelementen erzeugten Datensignale können dann unabhängig von der darin gespeicherten Information jeweils nur zwei Signalpegel bzw. eine Flanke aufweisen, so dass sich die bei der Datenübertragung auftretenden EMV-Störungen entsprechend reduzieren.

Vorteilhaft ist, wenn mindestens ein Sender eine Einrichtung zur Überprüfung der Plausibilität der vom Bus empfangenen Daten aufweist und wenn die Einrichtung zur Überprüfung der Plausibilität vorzugsweise derart mit der Sendeeinrichtung des Senders in Steuerverbindung steht, dass ein vom Ergebnis der Plauslbilitätsprüfung abhängiges Statussignal auf den Bus ausgebbar ist. Sollte bei der Datenübertragung ein Fehler festgestellt werden, können die entsprechenden Daten ggf. verworfen werden. Ferner besteht die Möglichkeit, die Daten, bei deren Übertragung der Fehler festgestellt wurde, noch einmal über den Bus zu übertragen.

Bei einer bevorzugten Ausgestaltung der Erfindung weist mindestens ein Sender eine Messvorrichtung zur Bestimmung der Zeitdauer auf, während der ein weiterer Sender mit der Übertragung von Daten auf den Bus an der Reihe ist, wobei die Messvorrichtung zum Vergleichen der Zeitdauer mit einem Grenzwert mit einer Vergleichsvorrichtung verbunden ist, und wobei die Vergleichsvorrichtung derart mit der Sendeeinrichtung des zuerst genannten Senders in Steuerverbindung steht, dass für den Fall, dass die gemessene Zeitdauer mit dem Grenzwert übereinstimmt und/oder größer ist als dieser, Daten der dem zuerst genannten Sender zugeordneten vorbestimmten Datenmenge von der Datenquelle diese Senders mittels der Sendeeinrichtung auf den Bus gesendet werden. Durch diese Maßnahme wird eine besonders stabile Datenübertragung über den Bus zu dem Empfänger ermöglicht.

Nachfolgend ist ein Ausführungsbeispiel der Erfindung anhand der Zeichnung näher erläutert. Es zeigt.
- Fig. 1: eine schematische Darstellung einer Kommunikationseinrichtung, die mehrere Sender und einen Empfänger aufweist, die über einen Daten- Bus miteinander verbunden sind,
- Fig. 2: ein Blockschaltbild eines als Master dienenden ersten Senders,
- Fig. 3: ein Blockschaltbild eines als Slave ausgestalteten zweiten Senders,
- Fig. 4: ein Blockschaltbild des Empfängers, und
- Fig. 5: eine schematische Darstellung von Signalen, die über den Bus übertra- gen werden.

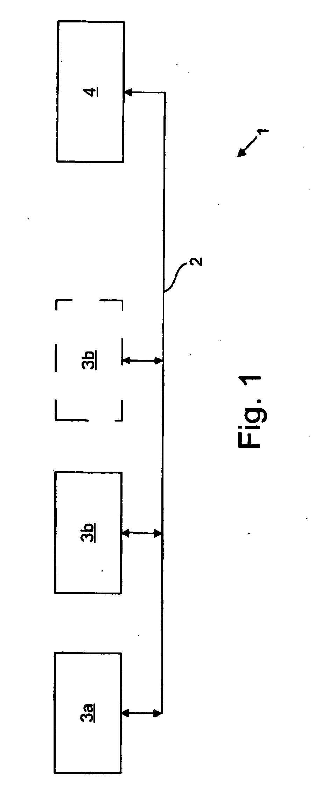

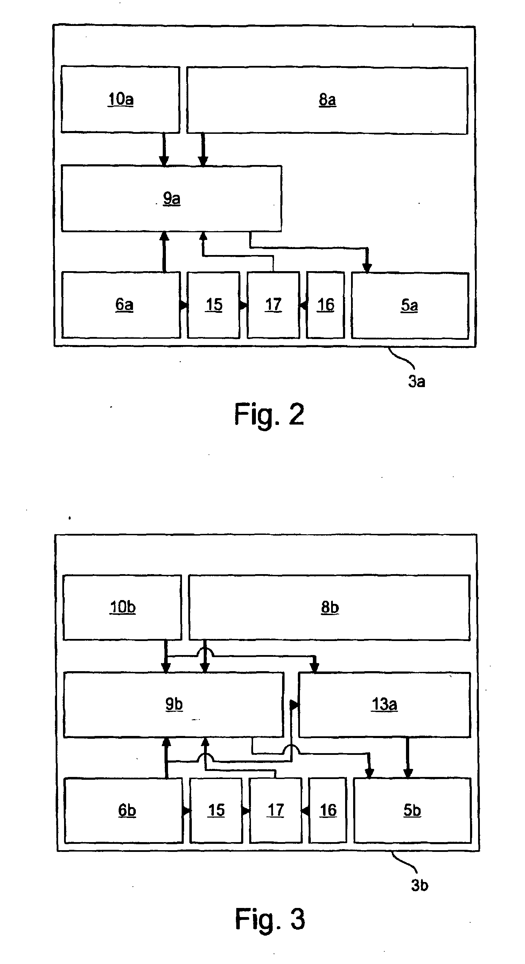

Eine In Fig. 1 im Ganzen mit 1 bezeichnete Kommunikationseinrichtung weist einen Bus 2 auf, an den mehrere Sender 3a, 3b und ein Empfänger 4 angeschlossen sind. Für die Kommunikation über den Bus 2 haben die Sender 3a, 3b jeweils eine erste Busschnittstelle und der Empfänger 4 eine zweite Busschnittstelle. In Fig. 2 und 3 ist erkennbar, dass die ersten Busschnittstellen jeweils eine Sendeeinrichtung 5a, 5b und eine erste Empfangseinrichtung 6a, 6b umfassen. Der Empfänger 4 hat eine zweite Empfangseinrichtung 7. Die Sendeeinrichtungen 5a, 5b, die ersten Empfangseinrichtungen 6a, 6b und die zweite Empfangseinrichtung 7 sind jeweils am Bus 2 angeschlossen.

Jeder Sender 3a, 3b hat jeweils eine Datenquelle 8a, 8b, die einen In der Zeichnung nicht näher dargestellten Sensor zur Erfassung eines digitalen Messsignals aufweist. Die Datenquelle 8a, 8b ist jeweils über eine erste Steuereinrichtung 9a, 9b mit der Sendeeinrichtungen 5a, 5b des betreffenden Senders 3a, 3b verbunden. Jeder Sender 3a, 3b weist außerdem einen Taktgeber 10a, 10b auf, der mit der ersten Steuereinrichtung 9a, 9b verbunden Ist. Die erste Steuereinrichtung 9a, 9b jedes Senders 3a, 3b ist außerdem jeweils mit der ersten Empfangseinrichtung 6a, 6b des betreffenden Senders 3a, 3b verbunden.

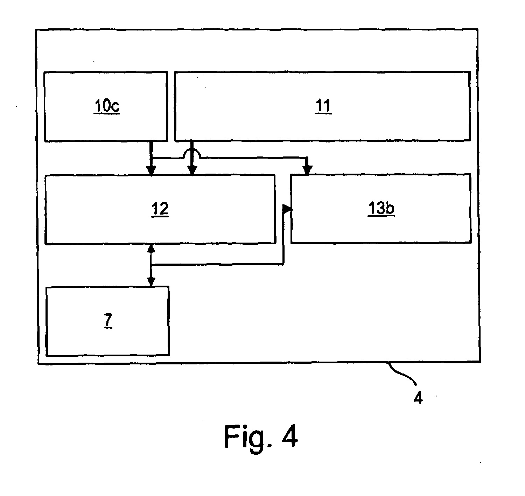

In Fig. 4 ist erkennbar, dass der Empfänger 4 eine Datensenke 11 aufweist. Diese kann beispielsweise einen Datenspeicher umfassen, in dem von den einzelnen Datenquellen 8a, 8b über den Bus 2 übertragene digitale Messsignale bzw. Messwerte abgelegt werden können. Die Datensenke 11 ist über eine zweite Steuereinrichtung 12 mit der zweiten Empfangseinrichtung 7 verbunden. Die zweite Steuereinrichtung 12 ist außerdem an einem dem Empfänger 4 zugeordneten Taktgeber 10c angeschlossen.

Der Sender 3a dient als Master und hat eine Einrichtung zum Erzeugen eines Mastertaktsignals, das durch Frequenztellung aus einem Ausgangssignal des Taktgebers 10a gebildet wird. Das Mastertaktsignal kann mit Hilfe der Sendeeinrichtung 5a des Senders 3a In Form eines Synchronisationssignals 14 auf den Bus gesendet werden. Während der Übertragung des Synchronisationssignals 14 wird der Bus für eine eine vorbestimmte Anzahl von Taktzyklen des Mastertaktslgnals dauernde Zeitdauer auf eine vorbestimmten Signalpegel gelegt.

Die Sensoren 3b sind als Slave ausgestaltet und weisen jeweils eine Taktsynchronisationseinrichtung 13a auf, die mit dem Taktgeber 10b und der Empfangseinrichtung 6b des betreffenden Sensors 3b verbunden ist. Mit Hilfe der Taktsynchronisationseinrichtung 13a wird beim Auftreten des Synchronisationssignals 14 ein in dem betreffenden Sensor 3b durch Frequenzteilung aus einem Ausgangssignal des Taktgebers 10b erzeugtes Taktsignal zum Mastertaktsignal des Sensors 3a bezüglich Frequenz und Phasenlage synchronisiert.

In entsprechender Weise ist der Empfänger 4 mit einer Taktsynchronlsationseinrichtung 13b ausgestaltet, die mit dem Taktgeber 10c und der zweiten Empfangseinrichtung 7 verbunden ist. Mit Hilfe der Taktsynchronisationseinrichtung 13b wird beim Auftreten des Synchronisationssignals 14 ein im Empfänger 4 durch Frequenzteilung aus einem Ausgangssignal des Taktgebers 10c erzeugtes Taktsignal zum Mastertaktsignal des Sensors 3a bezüglich Frequenz und Phasenlage synchronlsiert.

Damit die einzelnen Sender 3a, 3b den Bus gemeinsam für die Übertragung der Daten von den Datenquellen 8a, 8b zur Datensenke 11 nutzen können, ohne dass es bei der Datenübertragung zu einer Kollision kommt, haben zumindest die als Slave ausgestalteten Sender 3b jeweils eine einen Datenmengenzähler aufweisende Messeinrichtung 15 zur Messung der Menge der über den Bus übertragenen Daten.

Die Messeinrichtung 15 ist jeweils zum Vergleichen des Zählerstands des Datenmengenzählers mit einem vorbestimmten, dem betreffenden Sender 3b zugeordneten Datenmengenwert 16 über eine Vergleichseinrichtung 17 mit der Steuereinrichtung 9b des Senders 3b verbunden.

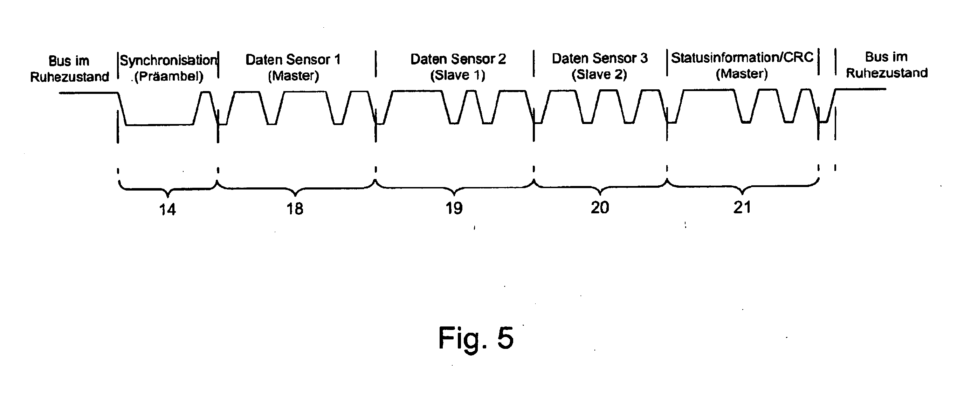

Wie anhand des Timingdiagramms in Fig. 5 erkennbar ist, sendet zu Beginn eines Datenübertragungszyklus zunächst der als Master ausgestaltete Sender 3a das Synchronisationssignal 14 auf den Bus 2. Das Synchronisationssignal 14 wird von den als Slave ausgestalteten Sendern 3b und vom Empfänger 4 empfangen, woraufhin diese jeweils ihre aus dem Ausgangssignal des Taktgebers 10b bzw. 10c erzeugtes Taktsignal mit dem Mastertaktsignal des Senders 3a synchronisieren. Beim Empfangen des Synchronisationssignal 14 setzen die Sender 3b jeweils den Zählerstand ihres Datenmengenzählers auf einen vorbestimmten Startwert, der beispielsweise den Wert Null haben kann.

Im Anschluss an das Synchronlsaflonsslgnal 14 sendet der Sender 3a, der nachstehend auch als erster Sender 3a bezeichnet wird, Daten, die von dessen Datenquelle 8a bereitgestellt werden, auf den Bus 2. Dass entsprechende Datensignal ist in Fig. 5 mit 18 bezeichnet. Die Daten weisen eine vorgegebene erste Datenmenge bzw. eine vorgegebenes erstes Datenvolumen auf. Die Daten werden in Form von Datenelementen auf den Bus gesendet, die beispielsweise einen Informationsgehalt von jeweils 4 Bit aufweisen können.

Ein erster Abschnitt jedes Datenelements weist einen ersten Signalpegel und ein zweiter Abschnitt einen zweiten Signalpegel auf Der erste Abschnitt hat eine feste und der zweite Abschnitt eine von einer dem Datenelement zugeordneten, über den Bus zu übertragende Information abhängige variable Zeitdauer, die - je nach Information - der ersten Zeitdauer oder einem Vielfachen davon entspricht.

Nach Jedem Senden eines Datenelements ermittelt der erste Sender 3a jeweils die von Ihm auf den Bus gesendete Datenmenge und vergleicht diese mit der dem ersten Sender 3a zugeordneten, vorbestimmten Datenmenge. Wenn die ermittelte Datenmenge kleiner ist als die vorbestimmte Datenmenge, werden die genannten Schritte wiederholt, d.h. der erste Sender 3a überträgt ein weiteres Datenelement auf den Bus 2, um danach erneut zu prüfen, ob die vorbestimmte Datenmenge gesendet wurde. Dieser Vorgang wird solange wiederholt, bis die vorbestimmte Datenmenge auf den Bus übertragen wurde.

Während der erste Sender 3a die Datenelemente auf den Bus 2 sendet, lesen die übrigen Sender 3b und der Empfänger 4 die Datenelemente vom Bus ein. Dabei wird das Einlesen der Datenelemente mit Hilfe des Taktsignals des betreffenden Senders 3b bzw. des Empfängers 4 synchronisiert. Nach jedem Einlesen eines Datenelements passen zumindest diejenigen Sender 3b, die noch keine Datenelemente auf den Bus 2 gesendet haben, den Zählerstand Ihres Datenmengenzählers an die empfangene Datenmenge an und vergleichen ihn mit einem dem betreffenden Sender 3b zugeordneten, vorbestimmten Datenmengenwert.

Falls der Vergleich ergibt, dass der Zählerstand den vorbestimmten Datenmengenwert noch nicht erreicht hat, wird der Vorgang jeweils wiederholt, d.h. es wird ein weiteres Datenelement vom Bus 2 eingelesen, der Datenmengenzähler wird entsprechend angepasst und der Zählerstand wird erneut mit dem den vorbestimmten Datenmengenwert verglichen. Sobald der Zählerstand eines Senders 3b den vorbestimmten Datenmengenwert erreicht hat, beginnt dieser Sender eine vorbestimmte, ihm zugeordnete Datenmenge auf den Bus 2 zu senden.

Der Datenmengenwert eines zweiten Senders 3b stimmt mit der vom ersten Sender 3a gesendeten Datenmenge überein, so dass der zweite Sender 3b damit beginnt Daten auf den Bus 2 zu senden, sobald der erste Sender 3a die ihm zugeordnete Datenmenge auf den Bus 2 übertragen hat. Das Datensignal des zweiten Senders 3b ist in Fig. 5 mit 19 bezeichnet.

In entsprechender Weise stimmt der Datenmengenwert eines dritten Senders 3b mit der Summe der von dem ersten Sender 3a und dem zweiten Sender 3b gesendeten Datenmenge überein, so dass der dritte Sender 3b damit beginnt, Daten auf den Bus 2 zu senden, sobald der zweite Sender 3b die ihm zugeordnete Datenmenge auf den Bus 2 übertragen hat. Das Datensignal des dritten Senders 3b ist in Fig. 5 mit 20 bezeichnet.

Bei Bedarf können In entsprechender Weise weitere am Bus angeschlossene Sender 3b Daten über den Bus 2 übertragen. Die einzelnen Sender 3a, 3b senden also nacheinander In einer festgelegten Reihenfolge ihre Daten über den Bus 2 zu dem Empfänger 4.

Der als Master dienende Sender 3a und mindestens ein weiterer Sender 3b empfangen, wenn sie gerade nicht senden, die über den Bus 2 übertragenen Datenelemente und überprüfen diese auf Plausibilität. In Abhängigkeit vom Ergebnis dieser Überprüfung senden die betreffenden Sender 3a, 3b zum Abschluss Jedes Datenübertragungszyklus jeweils nacheinander eine Statusinformation auf den Bus 2, beispielsweise in Form eines Diagnosebits. Das entsprechende Statussignal ist in Fig. 5 mit 21 bezeichnet. Bei der Plausibilitätsüberprüfung können die Datenelemente beispielsweise mit einem vorgegebenen, erlaubten Datenbereich verglichen werden.

Bei dem Verfahren zur Übertragung von Daten zwischen mindestens zwei Sendern 3a, 3b und einem Empfänger 4, wobei die Sender 3a, 3b und der Empfänger 4 an einem Bus 2 angeschlossen sind, wird also ein Synchronisationssignal an den Bus 2 angelegt und es werden eine Anzahl von Datenmengenzählern, die der um eins reduzierten Anzahl von Sendern 3a, 3b entspricht, auf einen vorbestimmten Startwert gesetzt. Ein erster Sender 3a überträgt durch Senden von Datenelementen eine vorbestimmte, dem Sender zugeordnete Datenmenge über den Bus zum Empfänger 4. Für jeden weiteren Sender 3b, 3a werden folgende Schritte durchlaufen:
1) Empfangen eines Datenelements vom Bus 2, ,
2) Anpassen des Zählerstands eines dem betreffenden Sender 3b, 3a zugeordneten Datenmengenzählers an die empfangene Datenmenge,
3) Vergleich des Zählerstands mit einem dem betreffenden Sender 3b, 3a zugeordneten, vorbestimmten Datenmengenwert,
4) falls der Zählerstand den vorbestimmten Datenmengenwert noch nicht erreicht hat: Wiederholen der Schritte 1) - 4),
5) Senden von Datenelementen einer vorbestimmten, dem betreffenden

Sender 3b, 3a zugeordneten Datenmenge über den Bus zum Empfänger 4. Der Datenmengenwert des weiteren Senders 3b, 3a wird derart gewählt oder die Datenmengenwerte der weiteren Sender 3b, 3a werden derart gewählt, dass jeweils nur ein Sender 3a, 3b gleichzeitig aufden Bus 2 sendet.

## Patentansprüche

1. Verfahren zur Übertragung von Daten zwischen mindestens zwei Sendern (3a, 3b) und wenigstens einem Empfänger (4), wobei die Sender (3a, 3b) und der wenigstens eine Empfänger (4) an einem Bus (2) angeschlossen sind, umfassend zumindest folgende Schritte:
a) Anlegen eines Synchronisationssignals (14) an den Bus (2) und Setzen zumindest einer Anzahl von Datenmengenzählern, die der um eins reduzierten Anzahl von Sendern (3a, 3b) entspricht, auf einen vorbestimmten Startwert,
b) für einen ersten Sender (3a, 3b) Durchlaufen folgender Schritte:
b1) Übertragen eines Datenelements vom Sender (3a, 3b) über den Bus (2) zu dem wenigstens einen Empfänger (4),
b2) Ermitteln der gesendeten Datenmenge,
**dadurch gekennzeichnet, daß**:
für den ersten Sender (3a, 3b) auch die folgenden Schritte durchlaufen werden:
b3) Vergleich der gesendeten Datenmenge mit einer dem Sender (3a, 3b) zugeordneten, vorbestimmten Datenmenge,
b4) wenn die ermittelte Datenmenge kleiner ist als die vorbestimmte Datenmenge: Wiederholen der Schritte b1) bis b4),
und daß
c) für jeden weiteren Sender (3b, 3a) folgende Schritte durchlaufen werden:
c1) Empfangen eines Datenelements vom Bus (2),
c2) Anpassen des Zählerstands eines dem betreffenden Sender (3b, 3a) zugeordneten Datenmengenzählers an die empfangene Datenmenge,
c3) Vergleich des Zählerstands mit einem dem betreffenden Sender (3b, 3a) zugeordneten, vorbestimmten Datenmengenwert,
c4) falls der Zählerstand den vorbestimmten Datenmengenwert noch nicht erreicht hat Wiederholen der Schritte c1) - c4),
c5) Durchführen der Schritte b1) bis b4) für den betreffenden Sender (3b, 3a),
und daß
der Datenmengenwert des weiteren Senders (3b, 3a) derart gewählt wird oder die Datenmengenwerte der weiteren Sender (3b, 3a) derart gewählt werden, dass jeweils nur ein Sender (3a, 3b) gleichzeitig auf den Bus (2) sendet.

2. Verfahren noch Anspruch 1, **dadurch gekennzeichnet, dass** bei mindestens zwei Datenelementen die Zeitdauer für die Übertragung vom Sender (3a, 3b) über den Bus (2) zu dem wenigstens einen Empfänger (4) unterschiedlich ist.

3. Verfahren nach Anspruch 1 oder 2, **dadurch gekennzeichnet, dass** mindestens ein Sender (3a, 3b) die Plausibilität der über den Bus übertragenen Datenelemente überprüft, und ein vom Ergebnis dieser Überprüfung abhängiges Statussignal (21) auf den Bus ausgibt.

4. Verfahren nach einem der Ansprüche 1 bis 3, **dadurch gekennzeichnet, dass** für mindestens einen Sender (3a, 3b) die Zeitdauer bestimmt wird, während welcher der betreffende Sender (3a, 3b) mit der Übertragung seiner Datenelemente auf den Bus (2) an der Reihe ist, dass die gemessene Zeitdauer mit einem Grenzwert verglichen wird, und dass für den Fall, dass die gemessene Zeitdauer mit dem Grenzwert übereinstimmt und/oder größer ist als dieser, ein weiterer Sender (3b) die In Anspruch 1 genannten Schritte b1) bis b4) durchführt.

5. Kommunikationseinrichtung (1) mit mindestens zwei an einem Bus (2) angeschlossenen Sendern (3a, 3b) und wenigstens einem an dem Bus (2) angeschlossenen Empfänger (4), wobei die Sender (3a, 3b) Jeweils mindestens eine Datenquelle (8a, 8b) und eine damit verbundene erste Busschnittstelle aufweisen, wobei der wenigstens eine Empfänger (4) eine Datensenke (11) und eine damit verbundene zweite Busschnittstelle hat, wobei eine Einrichtung zum Senden eines Synchronisationssignals auf den Bus (2) vorgesehen ist, wobei die ersten Busschnittstelien Jeweils eine mit dem Bus (2) verbundene Sendeeinrichtung (5a, 5b) aufweisen,
**dadurch gekennzeichnet, daß**
die ersten Busschnittstellen jeweils eine mit dem Bus (2) und einer Steuereinrichtung (9a, 9b) verbundene Empfangseinrichtung (6a, 6b), eine mit dieser verbundene, einen Datenmengenzähler aufweisende Messeinrichtung (15) zur Messung der Menge der über den Bus (2) übertragenen Daten, und eine mit der Messeinrichtung (15) und der Steuereinrichtung (9a, 9b) verbundene Vergleichseinrichtung (17) zum Vergleichen des Zählerstands des Datenmengenzählers mit mindestens einem vorbestimmten Datenmengenwert (16) aufweisen,
und daß die Steuereinrichtung (9a, 9b) eines ersten Senders (3a) derart mit dessen Empfangseinrichtung (6a) und dessen Sendeeinrichtung (5a) in Steuerverbindung steht, dass nach dem Empfangen des Synchronisationssignals (14) Daten einer vorbestimmten ersten Datenmenge von der Datenquelle (8a) des ersten Senders (3a) mittels der Sendeeinrichtung (5a) auf den Bus (2) gesendet wird,
und daß die Steuereinrichtung (9b) mindestens eines zweiten Senders (3b) derart mit dessen Sendeeinrichtung (5b) in Steuerverbindung steht, dass nach dem Empfangen einer dem betreffenden zweiten Sender (3b) zugeordneten, vorbestimmten zweiten Datenmenge Daten einer vorbestimmten dritten Datenmenge von der Datenquelle (8b) des betreffenden zweiten Senders (3b) mittels dessen Sendeelnrichtung (5b) auf den Bus (2) gesendet werden, und
daß die erste Datenmenge, die mindestens eine zweite Datenmenge und die mindestens eine dritte Datenmenge derart gewählt sind, dass jeweils nur ein Sender (3α, 3b) gleichzeitig auf den Bus (2) sendet.

6. Kommunikationseinrichtung (1) nach Anspruch 5, **dadurch gekennzeichnet, dass** sie eine Einrichtung zum Senden eines Taktdauersignals auf den Bus (2) aufweist, dass die Sender (3a, 3b) jeweils einen mit der Sendeeinrichtung (5a, 5b) verbundenen Taktgeber (10a, 10b) zum Erzeugen eines Taktsignals haben, dass mindestens ein Taktgeber (10a, 10b) eine Stelleinrichtung zur Einstellung der Periodendauer seines Taktsignals aufweist, und dass die Stelleinrichtung derart mit der Empfangseinrichtung (6a, 6b) des betreffenden Senders (3a, 3b) In Steuerverbindung steht, dass die Periodendauer des Taktsignals In Abhängigkeit von der Dauer des Taktdauersignals einstellbar ist.

7. Kommunlkationseinrichtung (1) nach Anspruch 5 oder 6, **dadurch gekennzeichnet, dass** die Datenquelle (8a, 8b) mindestens einen Sensor zur Erfassung eines Messsignals aufweist.

8. Kommunikationseinrichtung (1) nach einem der Ansprüche 5 bis 7, **dadurch gekennzeichnet, dass** die Sendeeinrichtung (5a, 5b) eine Pulsweitenmodulationseinrichtung aufweist, mit der ein Datensignal erzeugbar ist, das zumindest einen einen ersten Signalpegel aufweisenden ersten Datensignalabschnitt und einen einen zweiten Signalpegel aufweisenden zweiten Datensignalabschnitt aufweist, und dass die Länge mindestens eines dieser Datenslgnalabschnltte von einer in dem Datensignal gespeicherten Information abhängig ist.

9. Kommunikationseinrichtung (1) nach einem der Ansprüche 5 bis 8, **dadurch gekennzeichnet, dass** mindestens ein Sender (3a, 3b) eine Einrichtung zur Überprüfung der Plausibilität der vom Bus empfangenen Daten aufweist und dass die Einrichtung zur Überprüfung der Plausibilität vorzugsweise derart mit der Sendeeinrichtung (5a, 5b) des Senders (3a, 3b) in Steuerverbindung steht, dass ein vom Ergebnis der Plausibilitätsprüfung abhängiges Statussignal (21) auf den Bus (2) ausgebbar ist.

10. Kommunikaflonseinrichtung (1) nach einem der Ansprüche 5 bis 9, **dadurch gekennzeichnet, dass** mindestens ein Sender (3b) eine Messvorrichtung zur Bestimmung der Zeitdauer aufweist, während der ein weiterer Sender (3a, 3b) mit der Übertragung von Daten auf den Bus an der Reihe ist, dass die Messvorrichtung zum Vergleichen der Zeitdauer mit einem Grenzwert mit einer Vergleichsvorrichtung verbunden ist, und dass die Vergleichsvorrichtung derart mit der Sendeeinrichtung (5b) des zuerst genannten Senders (3b) in Steuerverbindung steht, dass für den Fall, dass die gemessene Zeitdauer mit dem Grenzwert übereinstimmt und/oder größer Ist als dieser, Daten der dem zuerst genannten Sender (3b) zugeordneten vorbestimmten Datenmenge von der Datenquelle (8b) diese Senders (3b) mittels der Sendeeinrichtung (5b) auf den Bus (2) gesendet werden.

## Claims

1. Method for the transmission of data between at least two transmitters (3a, 3b) and at least one receiver (4), wherein the transmitters (3a, 3b) and the least one receiver (4) are connected to a bus (2), comprising at least the following steps:
a) a synchronization signal (14) is applied to the bus (2) and at least one number of data volume counters, which corresponds to the number of transmitters (3a, 3b) reduced by one, are set to a predetermined start value,
b) the following steps are performed for a first transmitter (3a, 3b):
b1) a data element is transmitted from the transmitter (3a, 3b) via the bus (2) to the at least one receiver (4),
b2) the transmitted data volume is ascertained,
**characterized in that:**
the following steps are also performed for the first transmitter (3a, 3b):
b3) the transmitted data volume is compared with a predetermined data volume associated with the transmitter (3a, 3b),
b4) if the ascertained data volume is smaller than the predetermined data volume: steps b1) to b4) are repeated,
and **in that**
c) the following steps are performed for every further transmitter (3b, 3a):
c1) a data element is received from the bus (2),
c2) the counter reading of a data volume counter associated with the relevant transmitter (3b, 3a) is matched to the received data volume,
c3) the counter reading is compared with a predetermined data volume value associated with the relevant transmitter (3b, 3a),
c4) if the counter reading has not reached the predetermined data volume value yet: steps c1) - c4) are repeated,
c5) steps b1) to b4) are performed for the relevant transmitter (3b, 3a),
and **in that**
the data volume value of the further transmitter (3b, 3a) is chosen such, or the data volume values of the further transmitters (3b, 3a) are chosen such, that only one transmitter (3a, 3b) simultaneously transmits to the bus (2) in each case.

2. Method according to Claim 1, **characterized in that** in the case of at least two data elements the period for the transmission from the transmitter (3a, 3b) via the bus (2) to the at least one receiver (4) is different.

3. Method according to Claim 1 or 2, **characterized in that** at least one transmitter (3a, 3b) checks the plausibility of the data elements transmitted via the bus and outputs a status signal (21), which is dependent on the result of said check, to the bus.

4. Method according to one of Claims 1 to 3, **characterized in that** for at least one transmitter (3a, 3b) the period during which it is the turn of the relevant transmitter (3a, 3b) to transmit its data elements to the bus (2) is determined, **in that** the measured period is compared with a limit value, and **in that** if the measured period matches the limit value and/or is greater than it then a further transmitter (3b) performs steps b1) to b4) from Claim 1.

5. Communication device (1) having at least two transmitters (3a, 3b) which are connected to a bus (2) and at least one receiver (4) which is connected to the bus (2), wherein the transmitters (3a, 3b) respectively have at least one data source (8a, 8b) and a first bus interface connected thereto, wherein the at least one receiver (4) has a data sink (11) and a second bus interface connected thereto, wherein a device for transmitting a synchronization signal to the bus (2) is provided, wherein the first bus interfaces respectively have a transmission device (5a, 5b) which is connected to the bus (2),
**characterized in that** the first bus interfaces respectively have a reception device (6a, 6b) which is connected to the bus (2) and to a control device (9a, 9b), have a measuring device (15), which is connected to said reception device and has a data volume counter, for measuring the volume of the data transmitted by the bus (2), and have a comparison device (17), which is connected to the measuring device (15) and to the control device (9a, 9b), for comparing the counter reading of the data volume counter with at least one predetermined data volume value (16),
and **in that** the control device (9a, 9b) of a first transmitter (3a) has a control connection to the reception device (6a) of said first transmitter and to the transmission device (5a) of said first transmitter such that, following reception of the synchronization signal (14), data from a predetermined first data volume are sent from the data source (8a) of the first transmitter (3a) to the bus (2) by means of the transmission device (5a), and **in that** the control device (9b) of at least one second transmitter (3b) has a control connection to the transmission device (5b) of said second transmitter such that, following the reception of a predetermined second data volume associated with the relevant second transmitter (3b), data from a predetermined third data volume are transmitted from the data source (8b) of the relevant second transmitter (3b) to the bus (2) by means of the transmission device (5b) of said second transmitter, and **in that** the first data volume, the at least one second data volume and the at least one third data volume are chosen such that only one transmitter (3a, 3b) simultaneously transmits to the bus (2) in each case.

6. Communication device (1) according to Claim 5, **characterized in that** it has a device for transmitting a clock period signal to the bus (2), **in that** the transmitters (3a, 3b) respectively have a clock generator (10a, 10b), which is connected to the transmission device (5a, 5b), for generating a clock signal, and **in that** at least one clock generator (10a, 10b) has an adjusting device for adjusting the period duration of the clock signal from said clock generator, and **in that** the adjusting device has a control connection to the reception device (6a, 6b) of the relevant transmitter (3a, 3b) such that the period duration of the clock signal can be adjusted on the basis of the duration of the clock period signal.

7. Communication device (1) according to Claim 5 or 6, **characterized in that** the data source (8a, 8b) has at least one sensor for capturing a measurement signal.

8. Communication device (1) according to one of Claims 5 to 7, **characterized in that** the transmission device (5a, 5b) has a pulse width modulation device which can be used to generate a data signal which has at least one first data signal section, having a first signal level, and a second data signal section, having a second signal level, and **in that** the length of at least one of said data signal sections is dependent on a piece of information stored in the data signal.

9. Communication device (1) according to one of Claims 5 to 8, **characterized in that** at least one transmitter (3a, 3b) has a device for checking the plausibility of the data received from the bus and **in that** the device for checking the plausibility preferably has a control connection to the transmission device (5a, 5b) of the transmitter (3a, 3b) such that a status signal (21) which is dependent on the result of the plausibility check can be output to the bus (2).

10. Communication device (1) according to one of Claims 5 to 9, **characterized in that** at least one transmitter (3b) has a measuring apparatus for determining the period during which it is the turn of a further transmitter (3a, 3b) to transmit data to the bus, and **in that** the measuring apparatus is connected to a comparison apparatus for the purpose of comparing the period with a limit value, and **in that** the comparison apparatus has a control connection to the transmission device (5b) of the first-mentioned transmitter (3b) such that if the measured period matches the limit value and/or is greater than it then data from the predetermined data volume associated with the first-mentioned transmitter (3b) are transmitted from the data source (8b) of said transmitter (3b) to the bus (2) by means of the transmission device (5b) .

## Revendications

1. Procédé de transmission de données entre au moins deux émetteurs (3a, 3b) et au moins un récepteur (4), les émetteurs (3a, 3b) et l'au moins un récepteur (4) étant raccordés à un bus (2), comprenant au moins les étapes suivantes :
a) application d'un signal de synchronisation (14) sur le bus (2) et initialisation à une valeur de départ prédéfinie d'au moins un certain nombre de compteurs de volumes de données, lequel correspond au nombre d'émetteurs (3a, 3b) moins un,
b) exécution des étapes suivantes pour un premier émetteur (3a, 3b) :
b1) transmission d'un élément de données de l'émetteur (3a, 3b) vers l'au moins un récepteur (4) par le biais du bus (2),
b2) détermination du volume de données émis,
**caractérisé en ce que :**
les étapes suivantes sont également exécutées pour le premier émetteur (3a, 3b) :
b3) comparaison du volume de données émis avec un volume de données prédéfini associé à l'émetteur (3a, 3b),
b4) si le volume de données déterminé est inférieur au volume de données prédéfini : répétition des étapes b1) à b4),
et que
c) les étapes suivantes sont exécutées pour chaque émetteur (3a, 3b) supplémentaire :
c1) réception d'un élément de données du bus (2), c2) adaptation de la valeur comptée d'un compteur de volume de données associé à l'émetteur (3a, 3b) concerné au volume de données reçu,
c3) comparaison de la valeur comptée avec une valeur de volume de données prédéfinie associée à l'émetteur (3a, 3b) concerné,
c4) si la valeur comptée n'a pas encore atteint la valeur de volume de données prédéfinie : répétition des étapes c1) - c4),
c5) exécution des étapes b1) à b4) pour l'émetteur concerné (3b, 3a),
et que ,
la valeur du volume de données de l'émetteur supplémentaire (3b, 3a) est choisie de telle sorte ou
les valeurs du volume de données des émetteurs (3b, 3a) supplémentaires sont choisies de telle sorte qu'un seul émetteur (3a, 3b) à la fois émet simultanément sur le bus (2).

2. Procédé selon la revendication 1, **caractérisé en ce que** la durée de la transmission de l'émetteur (3a, 3b) vers l'au moins un récepteur (4) par le biais du bus (2) est différente pour au moins deux éléments de données.

3. Procédé selon la revendication 1 ou 2, **caractérisé en ce qu'**au moins un émetteur (3a, 3b) vérifie la plausibilité des éléments de données transmis par le biais du bus et délivre sur le bus un signal d'état (21) qui dépend du résultat de ce contrôle.

4. Procédé selon l'une des revendications 1 à 3, **caractérisé en ce que** la durée pendant laquelle il est le tour d'au moins un émetteur (3a, 3b) de transmettre ses éléments de données sur le bus (2) est déterminée pour l'émetteur (3a, 3b) concerné, que la durée mesurée est comparée avec une valeur limite et que dans le cas où la durée mesurée coïncide avec la valeur limite et/ou est supérieure à celle-ci, un émetteur (3b) supplémentaire exécute les étapes b1 à b4) mentionnées dans la revendication 1.

5. Dispositif de communication (1) comprenant au moins deux émetteurs (3a, 3b) raccordés à un bus (2) et au moins un récepteur (4) raccordé au bus (2), les émetteurs (3a, 3b) présentant respectivement au moins une source de données (8a, 8b) et une première interface de bus reliée avec celle-ci, l'au moins un récepteur (4) possédant un collecteur de données (11) et une deuxième interface de bus reliée avec celui-ci, un dispositif pour émettre un signal de synchronisation sur le bus (2) étant prévu, les premières interfaces de bus présentant respectivement un dispositif d'émission (5a, 5b) relié avec le bus (2), **caractérisé en ce que** les premières interfaces de bus présentent respectivement un dispositif de réception (6a, 6b) relié avec le bus (2) et un dispositif de commande (9a, 9b), un dispositif de mesure (15) relié avec celui-ci et présentant un compteur de volume de données pour mesurer le volume de données transmises par le biais du bus (2) et un dispositif de comparaison (17) relié avec le dispositif de mesure (15) et le dispositif de commande (9a, 9b) pour comparer la valeur comptée par le compteur de volume de données avec au moins une valeur de volume de données prédéfinie (16),et que le dispositif de commande (9a, 9b) d'un premier émetteur (3a) est en liaison de commande avec son dispositif de réception (6a) et son dispositif d'émission (5a) de telle sorte qu'après la réception du signal de synchronisation (14), les données d'un premier volume de données prédéfini sont émises sur le bus (2) au moyen du dispositif d'émission (5a) depuis la source de données (8a) du premier émetteur (3a),et que le dispositif de commande (9b) d'au moins un deuxième émetteur (3b) est en liaison de commande avec son dispositif d'émission (5b) de telle sorte qu'après la réception d'un deuxième volume de données prédéfini associé au deuxième émetteur (3b) concerné, les données d'un troisième volume de données prédéfini sont émises sur le bus (2) depuis la source de données (8b) du deuxième émetteur (3b) concerné au moyen de son dispositif d'émission (5b),et que le premier volume de données, l'au moins un deuxième volume de données et l'au moins un troisième volume de données sont choisis de telle sorte qu'un seul émetteur (3a, 3b) émet à chaque fois simultanément sur le bus (2).

6. Dispositif de communication (1) selon la revendication 5, **caractérisé en ce qu'**il présente un dispositif pour émettre un signal de durée d'horloge sur le bus (2), que les émetteurs (3a, 3b) comprennent respectivement un générateur d'horloge (10a, 10b) relié avec le dispositif d'émission (5a, 5b) pour générer un signal d'horloge, qu'au moins un générateur d'horloge (10a, 10b) présente un dispositif de réglage pour régler la durée de la période de son signal d'horloge et que le dispositif de réglage est en liaison de commande avec le dispositif récepteur (6a, 6b) de l'émetteur (3a, 3b) concerné de telle sorte que la durée de la période du signal d'horloge peut être réglée en fonction de la durée du signal de durée d'horloge.

7. Dispositif de communication (1) selon la revendication 5 ou 6, **caractérisé en ce que** la source de données (8a, 8b) présente au moins un capteur pour détecter un signal de mesure.

8. Dispositif de communication (1) selon l'une des revendications 5 à 7, **caractérisé en ce que** le dispositif d'émission (5a, 5b) présente un dispositif de modulation en largeur d'impulsion avec lequel peut être généré un signal de données qui présente au moins une première portion de signal de données présentant un premier niveau de signal et une deuxième portion de signal de données présentant un deuxième niveau de signal, et que la durée d'au moins l'une de ces portions de signal de données dépend d'une information enregistrée dans le signal de données.

9. Dispositif de communication (1) selon l'une des revendications 5 à 8, **caractérisé en ce qu'**au moins un émetteur (3a, 3b) présente un dispositif pour contrôler la plausibilité des données reçues par le bus et que le dispositif de contrôle de la plausibilité est en liaison de commande avec le dispositif d'émission (5a, 5b) de l'émetteur (3a, 3b) de préférence de telle sorte qu'un signal d'état (21) qui dépend du résultat du contrôle de plausibilité peut être délivré sur le bus (2).

10. Dispositif de communication (1) selon l'une des revendications 5 à 9, **caractérisé en ce qu'**au moins un émetteur (3b) présente un dispositif de mesure pour déterminer la durée pendant laquelle il est le tour d'un autre émetteur (3a, 3b) de transmettre des données sur le bus, que le dispositif de mesure est relié avec un dispositif de comparaison pour comparer la durée avec une valeur limite et que le dispositif de comparaison est en liaison de commande avec le dispositif d'émission (5b) de l'émetteur (3b) mentionné en premier de telle sorte que dans le cas où la durée mesurée coïncide avec la valeur limite et/ou est supérieure à celle-ci, les données du volume de données prédéfini associé à l'émetteur (3b) mentionné en premier sont émises sur le bus (2) depuis la source de données (8b) de cet émetteur (3b) au moyen du dispositif d'émission (5b).
